# EUROPEAN PATENT SPECIFICATION

(11) **EP 3 188 589 B1**
(45) Date of publication and mention of the grant of the patent: **23.05.2018**
(21) Application number: 15766623.1
(22) Date of filing: 07.08.2015
(51) Int. Cl.: A01G 9/02

(54) **MODULAR CONTAINER FOR PLANTS**
MODULARE PFLANZENBEHÄLTER
RÉCIPIENT MODULAIRE POUR PLANTES

(30) Priority: 04.09.2014 IT FI20140201
(43) Date of publication of application: 12.07.2017
(73) Proprietor: Bama S.p.A., 55011 Altopascio (LU) (IT)
(72) Inventor: BAIOCCHI, Renzo, 55015 Montecarlo (LU) (IT)
(74) Representative: Scorza, Federica
(86) International application number: PCT/IB2015/056007
(87) International publication number: WO 2016/034960

(56) References cited:
- GB-A- 2 400 119
- KR-A- 20110 057 709
- NL-A- 7 903 896
- US-A1- 2009 000 189

## Description

The present invention relates to a modular bowl for indoor and outdoor plants, such as disclosed by NL7903896. The present invention also relates to a kit comprising a plurality of modular bowls for indoor and outdoor plants.

Current bowls to hold indoor and outdoor plants are known having different shapes, for example frusto-conical or truncated pyramid with a rectangular base and made of various materials, such an example terracotta or plastic material. In particular in the case that the bowls are made of plastic, bowls are known including plates coupled to a container where is placed the land in which the plants live.

Also pot shaped to be coupled to each other and form compositions of various shapes and features are known. In this case the bowls are configured to coupled to each other and present mechanic coupling elements for this scope. The systems for the realization of bowls compositions currently known are relatively complex and non-functional, in particular for the issue concerning irrigation.

The aim of the invention is to provide a modular bowls for indoor and outdoor plants, which overcomes or reduces one or more of the drawbacks of the known bowls used to realize a composition.

### SUMMARY OF THE INVENTION

According to an aspect of the invention, a modular bowl for indoor and outdoor plants is provided, comprising:
- an inner container with a bottom provided with openings for the passage of irrigation water and with an upper edge at least partially surrounded by a flange, in which at least one first upper connector provided with an inlet for the entry of irrigation water is provided;
- an outer casing, within which the inner container is housed provided with a bottom wall with at least a first lower connector, provided with at least one outlet for discharging the irrigation water.

The upper connector and the lower connector are configured for coupling each other forming a passage for irrigation water between two modular bowls between an interspace formed between the inner container and the outer casing of a modular bowl overlying toward a cavity formed between the inner container and the outer casing of a lower modular bowl.

A plurality of modular bowls can thus be mutually coupled in a stacked structure to form a very complex and extensive composition or combination. Irrigation is made simple by the fact that it is sufficient to supply water through the upper connectors of the bowls having higher altitude. The water will then descend by gravity through the various composed connectors thus reaching the bowls having lower altitude.

In some embodiments the upper connector may comprise a collar surrounding the inlet for the entrance of the irrigation water, projecting from the flange on the opposite side with respect to the bottom of the inner container. The lower connector can in turn comprise an open cavity on an outer surface of the bottom wall of the outer casing. The collar and the cavity are configured to fit one inside the other and form a fluid and a mechanical coupling between stacked modular bowls. Preferably, the collar and the cavity present circular cross sections to allow a mutual rotation between coupled and stacked modular bowls with the collar of a lower modular bowl inserted in the cavity of an upper modular bowl. This allows to realize a great variety of combinations of stacked bowls differently arranged in space.

To obtain a high use flexibility, each modular bowl comprise two upper connector and two lower connector. If the modular bowl has an elongated shape, for example rectangular, it is advantageous to provide that the connectors are placed adjacent to its ends; in the case of bowls having elongated rectangular shape, the connectors will be preferably placed along the short sides.

The inner container and the outer casing can be both made of molded plastic material. In advantageous embodiments, the inner container is made as a monobloc, or as a single piece, molded in a single mold, through which the various parts of the container can be realized. The same can be made for the outer casing. This simplifies the production and makes cheaper the product.

Furthermore, the possibility that some at least of the sides of the inner container or of the outer casing are made separately and assembled, for example by gluing, welding or the like, cannot not be excluded.

According to a different aspect, the invention relates to a kit comprising a plurality of modular bowls and a plurality of modular tubular elements each having a first end configured to couple to the internal connectors and a second end configured to be coupled to the external connectors of the modular bowls. The tubular element can be also advantageously made of plastic material.

The inner containers and the outer casings preferably have a flared shape, for example frusto-conical or frusto-pyramidal, to allow to stack a plurality of inner containers one on the other and a plurality of outer casings one on the other, merging them partially each other. In this way the overall dimensions of the modular bowls are reduced when they are disassembled, making storage, transport and exposure for sale easier and cheaper.

Further advantageous characteristics and embodiments of the modular bowl according to the invention will be described in the following with reference to the accompanying drawings and pointed out in the appended claims, which form an integral part of the present description.

### BRIEF DESCRIPTION OF DRAWINGS

The invention will be better understood by following the description and the attached drawings. More particularly, in the drawings:
- Figure 1 shows an axonometric view of the inner container and of the outer casing of a modular bowl, according to the invention;
- Figure 2 shows a side view along the line II-II in Figure 5 of the assembled modular bowls;
- Figure 3 shows a section according to III-III in Figure 2;
- Figure 4 shows an axonometric view of the assembled modular bowl;
- Figure 5 shows a view according to IV-IV in Fig.2;
- Figure 6 shows a plan view according to VI-VI of Fig.5;
- Figure 7 shows a combination of multiple modular bowls connected each other;

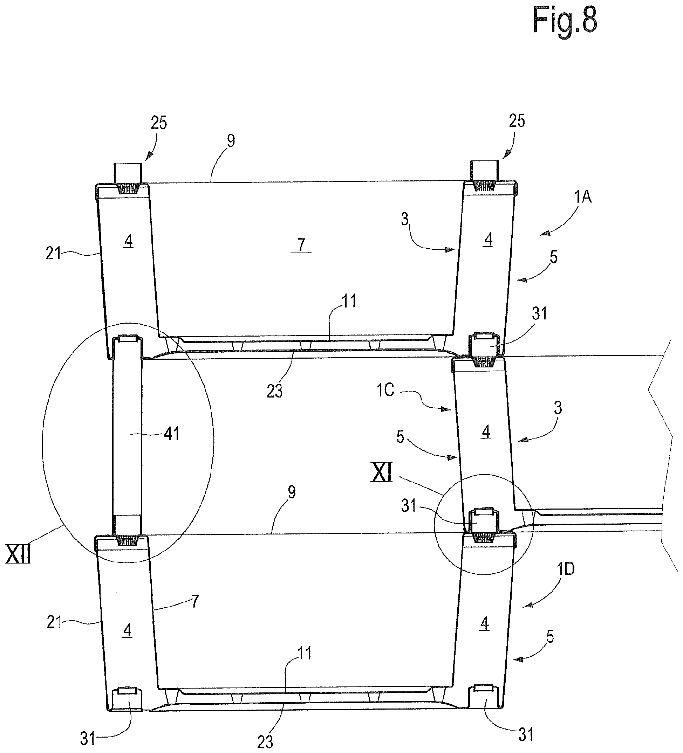

- Figure 8 shows a section along a vertical plane of a portion of the combination of modular bowls of Figure 7;
- Figures 9 and 10 show enlargements of details IX and X in Figure 3;
- Figures 11 and 12 show enlargements of details XI and XII of Figure 8; and
- Figure 13 shows an enlarged section of a modular bowls in a different embodiment.

### DETAILED DESCRIPTION OF EMBODIMENTS

The following detailed description of the different embodiments described as example refers to the accompanying drawings. The same reference numbers in different drawings identify the same or similar elements. Furthermore, the drawings are not necessarily in scale. The following detailed description does not limits the invention. Rather, the scope of the invention is defined by the appended claims.

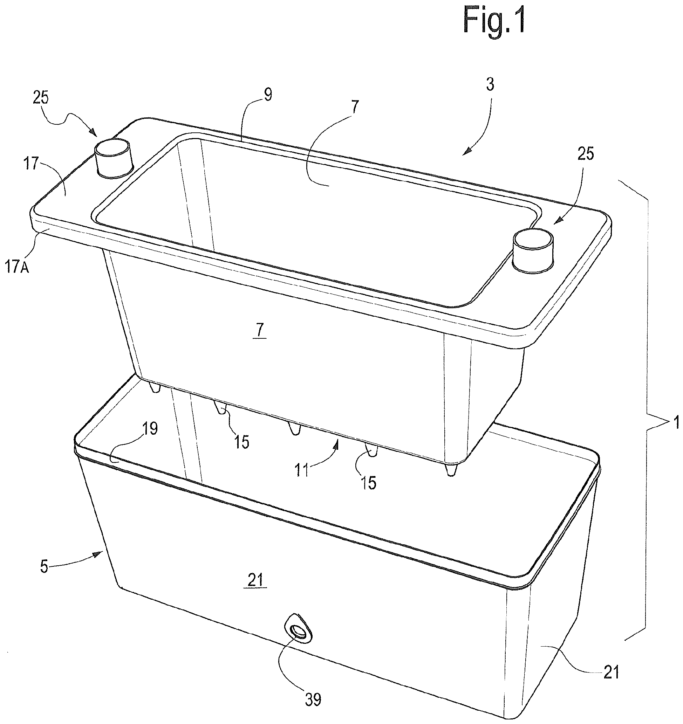

Figure 1 shows a modular pot in a sectional axonometric exploded view in a possible embodiment. The modular bowl 1 comprises an inner container 3 configured to be housed in an outer casing 5. In this embodiment, both the inner container 3 and the outer casing 5 have a substantially elongated frusto-pyramidal rectangular section. This form is particularly advantageous for the purposes of realization of compositions or combinations of multiple modular bowls, as it will become clearer from the following description. However, it is not excluded of to realize different shaped bowls, for example having a frusto-conical development with a base circular or elliptical, or pyramid-shaped trunk base, or polygonal with more than four sides.

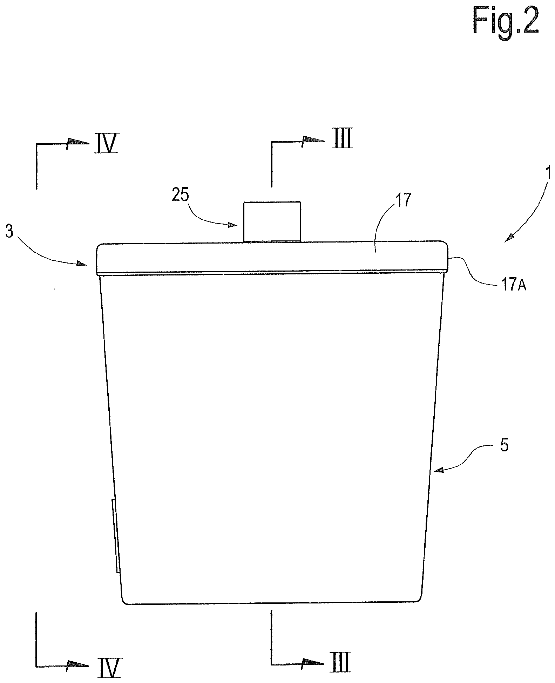

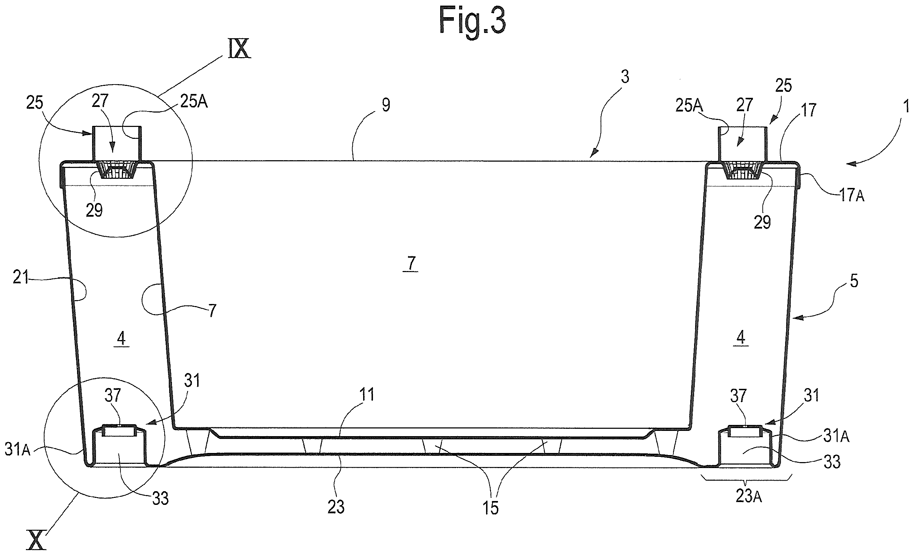

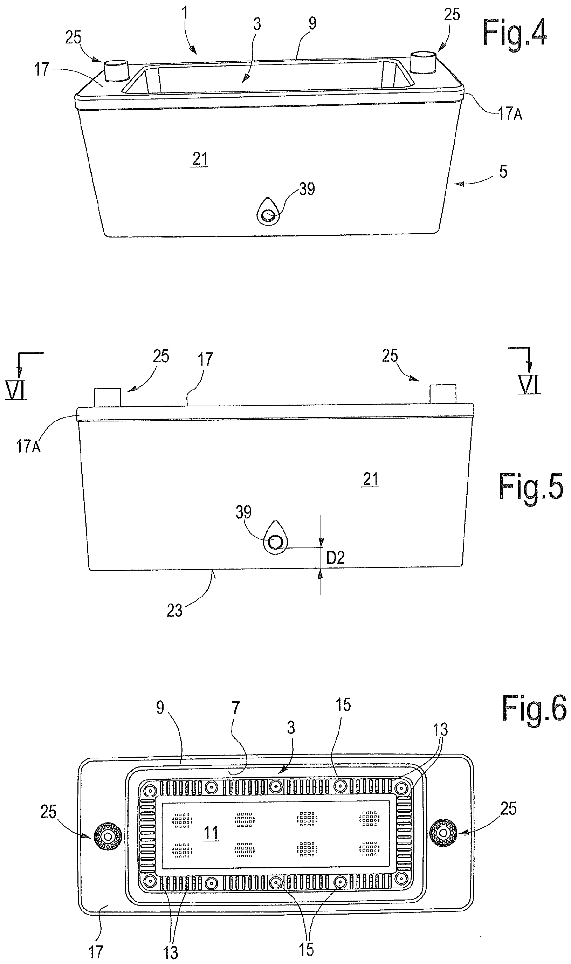

The inner container 3 comprises a body 7 delimited by side inclined walls, which define an internal flared volume, to facilitate the filling of the tank with earth and the removing of the plants. The inner container 3 also comprises an upper edge 9 and a bottom 11, visible in Figure 6. The bottom 11 can be advantageously accompanied by irrigation openings 13. From the outer surface of the bottom 11 supporting pins 15 configured to rest on a bottom wall of the outer casing 5 protrude, as shown in particular in the section of Figure 3, in which the inner container 3 is inserted in the outer casing 5, that is in the configuration of the modular bowl in the Figures 2-6.

In the assembled configuration, that is the use configuration, an interspace 4 is formed between the inner container 3 and the outer casing 5.

From the edge 9 of the inner container 3 a flange 17 protrudes. In the illustrated embodiment the flange 17 completely surrounds the edge 9 of the inner container 3, in particular it extends over all four sides of the inner container 3.

In advantageous embodiments, the flange 17 has a perimetric portion 17A bent toward the bottom 11 of the inner container 3.

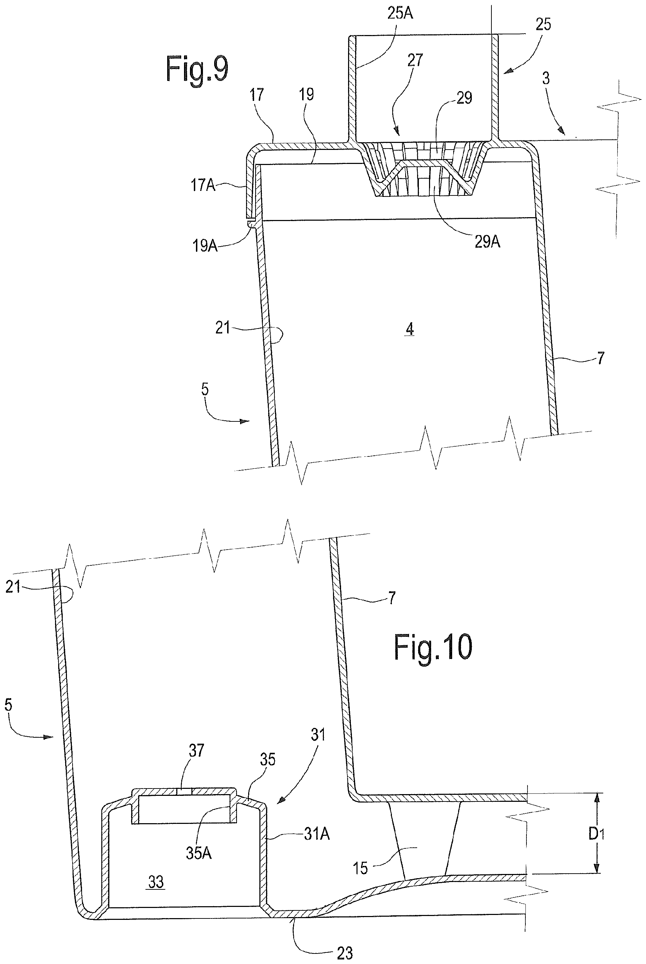

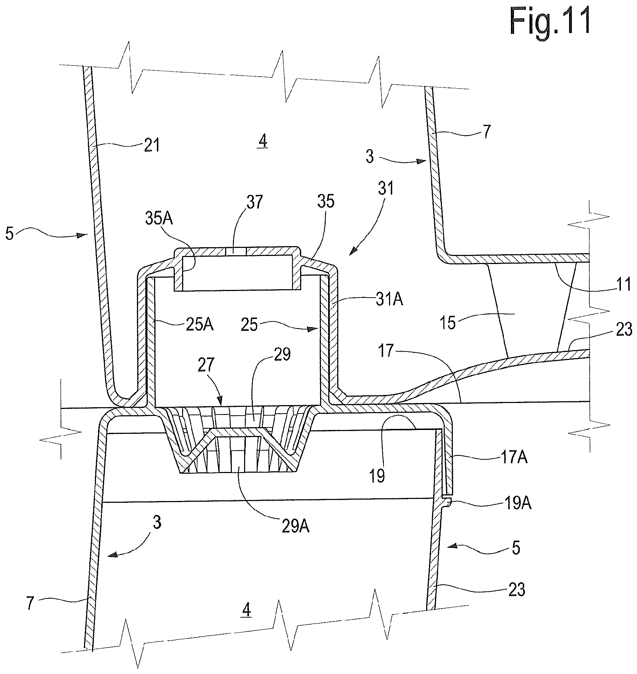

The perimetric bent portion 17A surrounds an edge 19 of the outer casing 5, which may be shaped with a perimetric raised portion 19A, to couple to the perimetric bent portion 17A of the flange 17, as better visible in Figures 9 and 11.

Side walls 21 depart from the edge 19 of the outer casing 5, the walls 21 being able to define an internal space of flared and tapered shape downwards and ending in correspondence of a bottom wall 23 of outer casing 5. The bottom wall 23 can be shaped to form side area 23A for supporting of the modular bowl, as visible in particular in the section of Figure 3.

Near two minor sides of the flange 17, the inner container 3 has a first upper connector and a second upper connector, both of them being indicated with the reference number 25. The two upper connectors 25 are preferably equal and only one of them will be described in details with reference in particular to the Figure 9.

In some embodiments, each upper connectors 25 presents a collar 25A which extends from the flange 17 in the opposite direction with respect to the side walls 7, and then from the opposite side with respect to the bottom 11. According to some advantageous embodiments the collar 25A has a circular cross section and is formed preferably by a cylindrical wall. In other embodiments the wall forming the collar 25A may be frusto-conical, or may comprise two parts, respectively a cylindrical part and a truncated-conical part.

An inlet 27 for the discharge of irrigation water used to irrigate the plants housed in the inner container 3 is formed inside the collar 25.

In some particularly advantageous embodiments, the inlet 27 can be provided with a grid 29, which serves to prevent or limit the passage of leaves, earth, or other solid debris coming from the flow of irrigation water through the inlet 27.

In the drawing, the grid 29 has a configuration of a double truncated cone, with a first truncated outer cone facing down (ie with the minor base facing the bottom wall of the bowl) and a truncated outer cone facing upwards, ie in the opposite direction. The central part 29A of the truncated inner cone is devoid of openings, so that the water drains away from the grid in the perimetric region but not in the central region, for the reasons which will be more apparent hereinafter.

The outer casing 5 comprises a first and a second connector less than 31, visible in particular in Figure 10. The two lower connectors 31 are preferably equal between them. In some embodiments each lower connector 31 comprises a cavity 33 which is open downwards, ie on the lower surface or on the outer surface of the bottom wall 23 of the outer casing 5. The cavity 33 can be bounded by a wall or collar 31A and may advantageously have a circular cross section. The wall or collar 31A may be substantially cylindrical or truncated-conical, or partly cylindrical and partly frusto-conical.

The cavity 33 is superiorly closed by an inner wall 35, in which an outlet 37 opens for the discharge of irrigation water. The outlet 37 is located at a distance D1 from the inner surface of the bottom wall 23 of the outer casing 5. The outlet 37 is arranged centrally in the inner wall 35 and is located under the non-perforated zone 29A of the above grid 29. In this way, water passing through the grid 29 does not flow directly through the outlet 37, but rather it accumulates on the bottom of the outer casing 5 until it reaches the portion of the outlet 37 and only at this point it flows through the latter.

At least one of the side walls 21 of the outer casing can be provided with a suitably overflow opening 39. This may be closed by means of a removable transparent cap, allowing to see if the water level in the interspace 4 has reached a certain level, as an example the center of the opening 39.

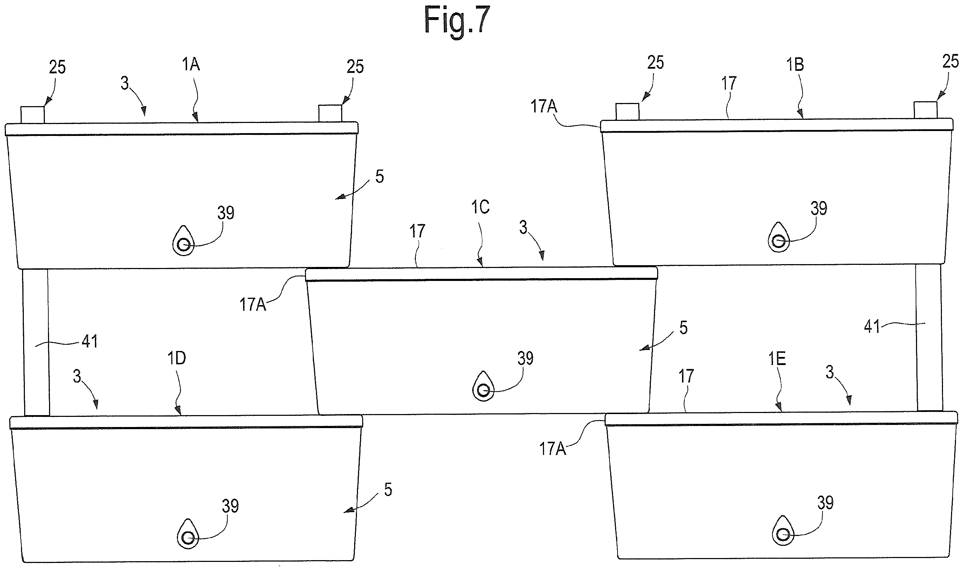

The configuration of the upper connectors 25 and of the lower connectors 31 is such as to allow a mutual coupling between stacked modular bowls. The bowls 1 may, in fact, be combined each other to form a composition or a combination developing in space. Figure 7 shows a simple combination of five modular bowls 1, arranged in a flat configuration, that is with all the modular bowls having the symmetry planes parallel to the coplanar long sides.

Figure 11 shows an enlarged detail of one of the upper connectors 25 of a modular bowl 1 coupled to the corresponding lower connector 31 of an overlying modular bowl 1. The collar 25A of the upper connector 25 of modular bowl is inserted into the cavity 33 defined by the wall 31A of the lower connector of the overlying modular bowl. If the connectors are made with a circular section, the mutual angular position of the bowls 1 stacked each other can be any, as the collar 25 can rotate around its own axis within the cavity 33 delimited by the wall 31A. This allows to arrange the various modular bowls 1 in the space according to variable angles with respect to each other and form, therefore, combinations having very complex shapes.

The modular bowls 1 mutually overlapped in the combination of Figure 7 are hydraulically connected to each other. Each modular bowl 1 is hydraulically connected to at least a modular bowl 1 below, by means of the coupling of at least one upper connector 25 of the modular bowl 1 below with a lower connector 31 of the overlying modular bowl 1. In this way, pouring water into at least one of the upper connectors 25 of various modular bowls higher positioned, the irrigation water irrigates also the modular bowls below.

For example, in the simple combination of Figure 7, the five modular bowls are marked with 1A, 1B, 1C, 1D and 1E and are placed at three distinct levels. The modular bowls 1A, 1B are at a higher level, the modular bowls 1D and 1E are at a lower level and the lower modular bowl 1C is placed at an intermediate level. One of the lower connectors 31 (not visible) of each of the modular bowls 1A, 1B is in fluid connection with the interspace 4 of the intermediate modular bowl 1C through the respective upper connector 25 of the latter. The interspace 4 of the intermediate modular bowl 1C is in fluid connection via the two lower connectors 31 with the interspaces 4 of the lower modular bowls 1D and 1E.

In this way, pouring irrigation water in the upper connectors 25 of the modular bowl 1A, 1B, the irrigation water is conveyed also to all other underlying modular bowl, so as to irrigate, through the irrigation openings 13. In each modular bowl 1A-1E the irrigation water level in each interspace 4 stabilizes at a height D1 from the bottom (Figure 10), since the excess water flows out through the oulets 37 towards the underlying modular bowls.

If for any reason the water is obstructed, for example because one or more of the grids 29 is partially or totally occluded by accumulated debris, the excess of water present in the interspace 4 of the modular bowl is visible through the transparent cap which closes the overflow opening 39. In this case the user can remove the cap and allow the outflow of excess water, possibly by placing under the overflow opening 39 is suitably placed at a distance D2 from the bottom wall 23, which is greater than the distance D1 at which the outlet is placed.

In advantageous embodiments the position of the opening 39 may be placed in such a way that the center of it lies at the ideal level at which the water should be in the interspace 4 of the modular bowl 1 and preferably at the position of the oulet 37. If the water level is higher, the user removes the cap to allow the outflow of the excess water, as described above. If, viceversa, the water level is located at a lower level, the user is able to realize that the water is insufficient and can proceed to add water to the bowl.

To realize combinations or compositions of modular bowls 1, 1A-1E staggered between them, as is also illustrated for the simple combination of Figure 7, a kit comprising a plurality of modular bowls 1A-1E and a plurality of tubular elements 41 can be used. The latter serves as hydraulic connection between modular bowls 1, 1A-1E placed at not consecutive levels, such as the modular bowls 1A and 1D in Figure 7. They also serve as mechanical auxiliary supports for mutual support between those not directly adjacent modular bowls.

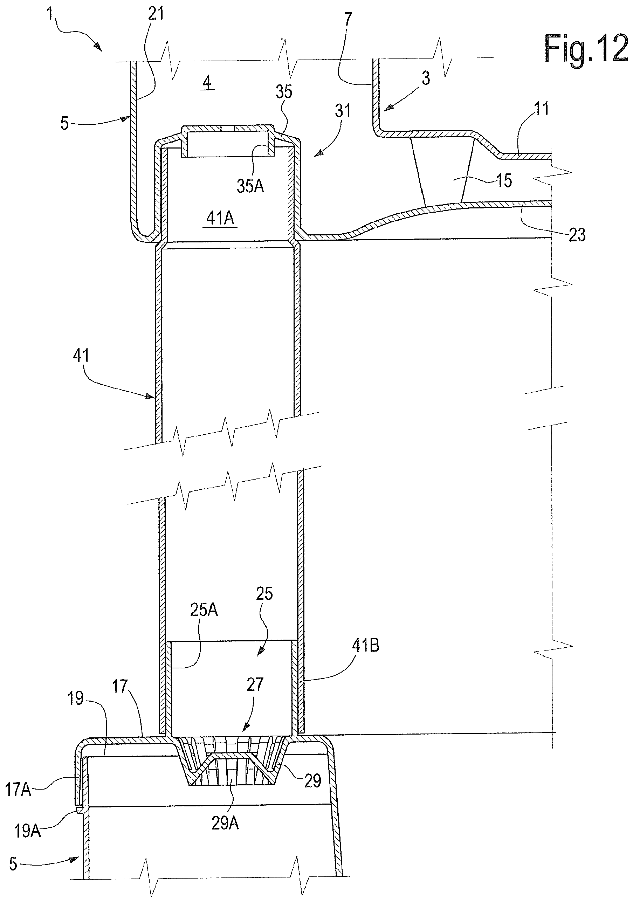

Each tubular element 41 has respective first and second ends 41, 41B (Figure 12) shaped to couple to the lower connectors 31 and to the upper connectors 25, respectively, of stacked modular bowls. In this way a fluid passage, that is a hydraulic connection, between connectors 31, 25 of non consecutive modular bowls.

In the illustrated embodiment the upper end 41A of the tubular element 41 is configured to enter into the cavity 33 of the bottom connector 31. To prevent water leaking between the wall of the tubular element 41 and the inner surface 31A delimiting the cavity 33, in advantageous embodiments the inner wall 35 may present an annular projection 35A which extends within the cavity 33.

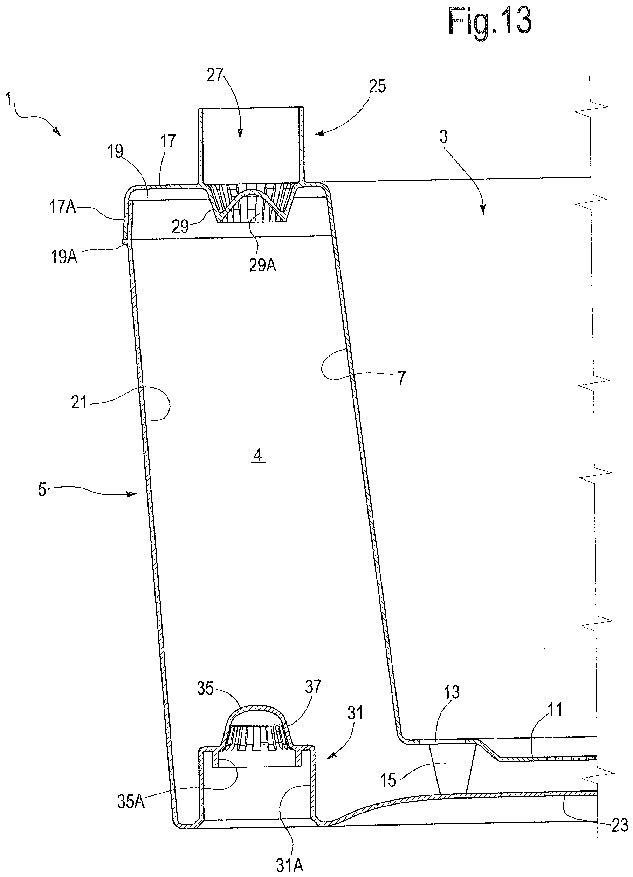

Figure 13 shows a sectioned and enlarged portion view of an embodiment of the modular bowl.

Identical numbers indicate parts identical or equivalent to those illustrated in the remaining figures. In the embodiment of Figure 13, the inner frusto-conical portion of the grid 29 presents a convex shape rather than a flat shape. Moreover, also the wall 35 of the lower connector 31 has a convex shape and defines a plurality of outlets 37 for water drainage, like a grid, instead of a single outlet.

This configuration improves the water flow outflow from an upper bowl to a lower bowl.

It is understood that the drawing purely shows a possible embodiment of the invention, which may vary in forms and arrangements without leaving the scope of the concept underlying the invention.

The presence of any reference numbers in the appended claims has the sole purpose of facilitating reading in the light of the description and of the attached drawings and does not limit in any way the scope of protection.

## Claims

1. Modular bowl (1) for containing plants comprising:
- an inner container (3) with a bottom (11) provided with openings (13) for the passage of irrigation water and with an upper edge (9) surrounded at least partly by a flange (17), in which at least one first upper connector (25) is formed provided with an inlet (27) for the entry of irrigation water;
- an outer casing (5) inside which the inner container (3) is housed, provided with a bottom wall (23) with at least a first lower connector (31) accompanied by at least one outlet (37) for discharging irrigation water;
wherein the upper connector (25) and the lower connector (31) are configured to couple each other forming a passage for irrigation water between two mutually overlapped modular bowls (1).

2. Modular bowl (1) according to claim 2, wherein:
- the first upper connector (25) comprises a collar (25A) surrounding the inlet (27) for the entry of irrigation water, projecting from the flange (17) on the opposite side with respect to the bottom (11) of the inner container (3);
- the lower connector (31) comprises a cavity (33) opened on an outer surface of the bottom wall (23) of the outer casing (5);
- and the collar (25A) and the cavity (33) are configured to fit one inside the other and to form a fluid coupling between stacked modular bowls (1).

3. Modular bowl (1) according to claim 2, wherein the collar (25A) and the cavity (33) have circular cross-sections, to allow a mutual rotation between coupled modular bowls (1), with the collar (25A) of a lower modular bowl (1) inserted into the cavity (33) of an upper modular bowl (1).

4. Modular bowl (1) according to claim 1 or 2 or 3, wherein the outlet (37) of the upper connector (25) comprises a grid (29) to create an obstacle to the passage of debris through said outlet (37).

5. Modular bowl (1) according to claim 4 when dependent at least on claim 2, wherein the grid (29) is housed inside the collar (25).

6. Modular bowl (1) according to one or more of the preceding claims, wherein the flange (17) of the inner container (3) integrally surrounds the upper edge (9) of the inner container (3) and is shaped to cooperate with an upper edge (19) of the outer casing (5).

7. Modular bowl (1) according to claim 6, wherein the flange (17) of the inner container (3) has a perimeter portion (17A) bent, facing towards the bottom (11) of the inner container (3) and configured to externally surround the upper edge (19) of the outer casing (5) and to couple with the inner container (3) of the outer casing (5).

8. Modular bowl (1) according to one or more of the preceding claims, wherein the outer casing (5) comprises an overflow outlet (39) arranged at a distance (D2) from the bottom wall (23) greater than the distance (D1) of said discharge outlet (37) from the bottom wall (23).

9. Modular bowl (1) according to one or more of the preceding claims, wherein the inner container (3) has supporting pins (15) protruding externally from the bottom (11) configured to rest on the bottom wall (23) of the outer casing (5).

10. Modular bowl (1) according to one or more of the preceding claims, wherein the inner container (3) comprises a second upper connector with a respective inlet for the entry of irrigation water; and wherein the outer casing (5) comprises a second lower connector with a respective discharge oulet of the irrigation water.

11. Modular bowl (1) according to claim 10, wherein the bowl (1) has an elongated rectangular shape, the first and the second upper connector and the first and the second bottom connector being arranged adjacent the smaller sides of the bowl (1).

12. Modular bowl (1) according to one or more of the preceding claims, wherein the inner container (3) and the outer casing (5) are integrally made of molded plastic monoblock material.

13. A kit for realizing combinations of modular bowls (1), comprising a plurality of modular bowls (1) according to one or more of the preceding claims, and a plurality of tubular elements (41) each having a first end configured to couple to the internal connectors and a second end configured to couple to the external connectors of the modular bowls (1).

14. A kit according to claim 13, wherein the tubular elements (41) are made of plastic material.

## Patentansprüche

1. Modulare Schale (1) zur Aufnahme von Pflanzen, umfassend:
- einen Innenbehälter (3) mit einem Boden (11), der mit Öffnungen (13) für den Durchgang von Gießwasser und mit einer oberen Kante (9) versehen ist, die mindestens teilweise von einem hervorstehenden Rand (17) umgeben ist, in dem mindestens ein erstes oberes Verbindungselement (25) gebildet ist, das mit einem Einlass (27) für den Eintritt von Gießwasser versehen ist;
- ein Außengehäuse (5), in dem der Innenbehälter (3) untergebracht ist, der mit einer unteren Wand (23) mit mindestens einem ersten unteren Verbindungselement (31) versehen ist, das von mindestens einem Auslass (37) zum Ablassen von Gießwasser begleitet ist;
wobei das obere Verbindungselement (25) und das untere Verbindungselement (31) dazu ausgelegt sind, sich gegenseitig zu koppeln, wodurch ein Durchgang für Gießwasser zwischen zwei miteinander überlappten modularen Schalen (1) gebildet wird.

2. Modulare Schale (1) nach Anspruch 2, wobei:
- das erste obere Verbindungselement (25) einen Bund (25A) umfasst, der den Einlass (27) für den Eintritt von Gießwasser umgibt, der von dem hervorstehenden Rand (17) an der gegenüberliegenden Seite in Bezug auf den Boden (11) des Innenbehälters (3) vorsteht;
- das untere Verbindungselement (31) einen Hohlraum (33) umfasst, der an einer Außenoberfläche der unteren Wand (23) des Außengehäuses (5) geöffnet ist;
- und der Bund (25A) und der Hohlraum (33) dazu ausgelegt sind, ineinander zu passen und eine Fluidkopplung zwischen gestapelten modularen Schalen (1) zu bilden.

3. Modulare Schale (1) nach Anspruch 2, wobei der Bund (25A) und der Hohlraum (33) kreisförmige Querschnitte haben, um eine gemeinsame Drehung zwischen gekoppelten modularen Schalen (1) zu erlauben, wobei der Bund (25A) einer unteren modularen Schale (1) in den Hohlraum (33) einer oberen modularen Schale (1) eingesetzt ist.

4. Modulare Schale (1) nach Anspruch 1 oder 2 oder 3, wobei der Auslass (37) des oberen Verbindungselements (25) ein Gitter (29) umfasst, um ein Hindernis für den Durchgang von Ablagerungen durch den Auslass (37) zu schaffen.

5. Modulare Schale (1) nach Anspruch 4, wenn abhängig mindestens von Anspruch 2, wobei das Gitter (29) in dem Bund (25) untergebracht ist.

6. Modulare Schale (1) nach einem oder mehreren der vorhergehenden Ansprüche, wobei der hervorstehende Rand (17) des Innenbehälters (3) die obere Kante (9) des Innenbehälters (3) integral umgibt und geformt ist, um mit einer oberen Kante (19) des Außengehäuses (5) zusammenzuwirken.

7. Modulare Schale (1) nach Anspruch 6, wobei der hervorstehende Rand (17) des Innenbehälters (3) einen gebogenen Umfangsabschnitt (17A) hat, der dem Boden (11) des Innenbehälters (3) zugewandt und dazu ausgelegt ist, die obere Kante (19) des Außengehäuses (5) extern zu umgeben und mit dem Innenbehälter (3) des Außengehäuses (5) zu koppeln.

8. Modulare Schale (1) nach einem oder mehreren der vorhergehenden Ansprüche, wobei das Außengehäuse (5) einen Überlaufauslass (39) umfasst, der in einem Abstand (D2) von der unteren Wand (23) angeordnet ist, der größer als der Abstand (D1) des Ablassauslasses (37) von der unteren Wand (23) ist.

9. Modulare Schale (1) nach einem oder mehreren der vorhergehenden Ansprüche, wobei der Innenbehälter (3) Stützstifte (15) hat, die extern von dem Boden (11) vorstehen und dazu ausgelegt sind, auf der unteren Wand (23) des Außengehäuses (5) aufzuliegen.

10. Modulare Schale (1) nach einem oder mehreren der vorhergehenden Ansprüche, wobei der Innenbehälter (3) ein zweites oberes Verbindungselement mit einem jeweiligen Einlass für den Eintritt von Gießwasser umfasst; und wobei das Außengehäuse (5) ein zweites unteres Verbindungselement mit einem jeweiligen Ablassauslass für das Gießwasser umfasst.

11. Modulare Schale (1) nach Anspruch 10, wobei die Schale (1) eine lang gestreckte rechteckige Form hat, wobei das erste und das zweite obere Verbindungselement und das erste und das zweite untere Verbindungselement angrenzend an die kleineren Seiten der Schale (1) angeordnet sind.

12. Modulare Schale (1) nach einem oder mehreren der vorhergehenden Ansprüche, wobei der Innenbehälter (3) und das Außengehäuse (5) einstückig aus geformtem Kunststoffmonoblockmaterial hergestellt sind.

13. Kit zum Umsetzen von Kombinationen von modularen Schalen (1), umfassend eine Vielzahl von modularen Schalen (1) nach einem oder mehreren der vorhergehenden Ansprüche und eine Vielzahl von röhrenförmigen Elementen (41) mit jeweils einem ersten Ende, das dazu ausgelegt ist, an die internen Verbindungselemente zu koppeln, und einem zweiten Ende, das dazu ausgelegt ist, an die externen Verbindungselemente der modularen Schalen (1) zu koppeln.

14. Kit nach Anspruch 13, wobei die röhrenförmigen Elemente (41) aus Kunststoffmaterial hergestellt sind.

## Revendications

1. Un bol modulaire (1) destiné à contenir des plantes et comprenant :
- un récipient interne (3) doté d'un fond (11) comportant des ouvertures (13) destinées au passage d'eau d'irrigation ainsi que d'un bord supérieur (9) au moins en partie entouré par une bride (17), et dans lequel sont formés un ou plusieurs premiers connecteurs supérieurs (25) dotés d'une entrée (27) destinée à l'eau d'irrigation ;
- une enveloppe externe (5) dans laquelle le récipient interne (3) est logé, ladite enveloppe comprenant une paroi inférieure (23) dotée d'un ou plusieurs premiers connecteurs inférieurs (31) accompagnés d'une ou plusieurs sorties (37) destinées à évacuer l'eau d'irrigation ;
ledit connecteur supérieur (25) et ledit connecteur inférieur (31) étant conçus pour être couplés l'un à l'autre afin de former un passage pour l'eau d'irrigation entre deux bols modulaires (1) en chevauchement mutuel.

2. Un bol modulaire (1) conforme à la revendication 2 et dans lequel :
- le premier connecteur supérieur (25) comprend un collier (25A) qui entoure l'entrée (27) destinée à l'eau d'irrigation, ledit collier faisant saillie depuis la bride (17) vers le côté opposé par rapport au fond (11) du récipient interne (3) ;
- le connecteur inférieur (31) comprend une cavité (33) ouverte sur une surface externe de la paroi inférieure (23) de l'enveloppe externe (5);
- et le collier (25A) et la cavité (33) sont conçus pour se loger l'un dans l'autre et former un couplage fluidique entre des bols modulaires empilés (1).

3. Un bol modulaire (1) conforme à la revendication 2 et dans lequel le collier (25A) et la cavité (33) bénéficient de sections transversales circulaires qui permettent la rotation mutuelle de bols modulaires couplés ensemble (1), le collier (25A) d'un bol modulaire inférieur (1) étant inséré dans la cavité (33) d'un bol modulaire supérieur (1).

4. Un bol modulaire (1) conforme à la revendication 1, 2 ou 3 et dans lequel la sortie (37) du connecteur supérieur (25) comprend une grille (29) destinée à faire obstacle au passage des débris par ladite sortie (37).

5. Un bol modulaire (1) conforme à la revendication 4 lorsque celle-ci est au moins conforme à la revendication 2, et dans lequel ladite grille (29) est logée dans le collier (25).

6. Un bol modulaire (1) conforme à une ou plusieurs des revendications précédentes et dans lequel la bride (17) du récipient interne (3) entoure intégralement le bord supérieur (9) du récipient interne (3) et est formée de manière à coopérer avec un bord supérieur (19) de l'enveloppe externe.

7. Un bol modulaire (1) conforme à la revendication 6 et dans lequel la bride (17) du récipient interne (3) bénéficie d'une partie de périmètre (17A) recourbée, ladite partie faisant face au fond (11) du récipient interne (3) et étant conçue pour entourer l'extérieur du bord supérieur (19) de l'enveloppe externe (5) et être couplée au récipient interne (3) de l'enveloppe externe (5).

8. Un bol modulaire (1) conforme à une ou plusieurs des revendications précédentes et dans lequel l'enveloppe externe (5) comprend une sortie de débordement (39) placée à une distance (D2) de la paroi inférieure (23), ladite distance (D2) étant supérieure à la distance (Dl) entre ladite sortie d'évacuation (37) et la paroi inférieure (23) .

9. Un bol modulaire (1) conforme à une ou plusieurs des revendications précédentes et dans lequel le récipient interne (3) est doté de broches de support (15) qui font saillie vers l'extérieur depuis le fond (11) et sont conçues pour reposer sur la paroi inférieure (23) de l'enveloppe externe (5).

10. Un bol modulaire (1) conforme à une ou plusieurs des revendications précédentes et dans lequel le récipient interne (3) comprend un second connecteur supérieur doté d'une entrée correspondante pour l'entrée de l'eau d'irrigation ; et dans lequel l'enveloppe externe (5) comprend un second connecteur inférieur doté d'une sortie d'évacuation correspondante destinée à l'eau d'irrigation.

11. Un bol modulaire (1) conforme à la revendication 10 et dans lequel ledit bol (1) est de forme rectangulaire allongée, et le premier et le second connecteurs supérieurs ainsi que le premier et le second connecteurs inférieurs sont placés de manière adjacente aux côtés les plus étroits du bol (1).

12. Un bol modulaire (1) conforme à une ou plusieurs des revendications précédentes et dans lequel ledit récipient interne (3) et l'enveloppe externe (5) sont intégralement fabriqués à partir d'un matériau monobloc en plastique moulé.

13. Un kit permettant de réaliser des combinaisons de bols modulaires (1), ledit kit comprenant une pluralité de bols modulaires (1) conformes à une ou plusieurs des revendications précédentes, et une pluralité d'éléments tubulaires (41) dont chacun est doté d'une première extrémité conçue pour être couplée aux connecteurs internes, et d'une seconde extrémité conçue pour être couplée aux connecteurs externes des bols modulaires (1).

14. Un kit conforme à la revendication 13 et dans lequel les éléments tubulaires (4) sont fabriqués en matériau plastique.
